# FASCICULE DE BREVET EUROPEEN

(11) **EP 1 316 160 B1**
(45) Date de publication et mention de la délivrance du brevet: **14.12.2005**
(21) Numéro de dépôt: 00990088.7
(22) Date de dépôt: 21.12.2000
(51) Int. Cl.: H04B 7/185

(54) **SYSTEME DE LIAISON PAR SATELLITE ENTRE UNE STATION TERRESTRE ET UNE STATION EMBARQUEE POUR TELEPHONES PORTABLES**
SYSTEM MIT SATELLITENVERBINDUNG ZWISCHEN EINER ERDGEBUNDENEN STATION UND EINER STATION AN BORD EINES SCHIFFES FÜR TRAGBARE TELEFONHANDGERÄTE
SATELLITE LINK SYSTEM BETWEEN A GROUND STATION AND AN ON-BOARD SHIP STATION FOR PORTABLE TELEPHONES

(30) Priorité: 05.09.2000 FR 0011273
(43) Date de publication de la demande: 04.06.2003
(73) Titulaire: GEOLINK S.A., 75008 Paris (FR)
(72) Inventeur: PILOYAN, Pascal, F-13390 Auriol (FR); BASSO, Jean-Pierre, F-13012 Marseille (FR)
(74) Mandataire: Callon de Lamarck, Jean-Robert
(86) Numéro de dépôt international: PCT/FR2000/003624
(87) Numéro de publication internationale: WO 2002/021725

(56) Documents cités:
- EP-A- 0 915 577
- EP-A- 0 998 062
- WO-A-01/15337
- WO-A-94/28684
- GB-A- 2 324 395
- US-A- 5 940 754
- US-A- 5 995 833

## Description

La présente invention a pour objet un système de liaison par satellite entre une station terrestre et une station embarquée pour téléphones portables.

Elle se rapporte d'une manière générale au domaine des réseaux de télécommunication internationaux permettant en particulier de relier des postes téléphoniques fixes ou mobiles.

Ces dernières années, les téléphones portables se sont prodigieusement développés dans le monde entier. Ce sont de petits combinés ultra légers contenant un émetteur-récepteur radio, qui se connectent automatiquement sur des bornes émettrices-réceptrices reliées au réseau téléphonique. Lors de chaque appel, c'est la borne la plus proche, ou celle avec laquelle la liaison hertzienne est la meilleure, qui est automatiquement sélectionnée. -

Le premier satellite de télécommunication fait son apparition au début des années 1960, mais la véritable révolution arrive en 1965 avec le premier satellite de la nouvelle organisation Internationale Intelsat : Early Bird (l'Oiseau du matin), placé en orbite géostationnaire au-dessus de l'Atlantique. Early Bird est le premier maillon d'une chaîne de satellites géostationnaires qui se déploie peu à peu tout autour de l'équateur et permet d'établir des communications globales.

Le brevet N° EP-A-0 998 062 décrit un système de liaison par satellite entre une station terrestre et une station embarquée à bord d'un véhicule de transport de passagers. La dite station embarquée comporte une station de contrôle pilotant un ensemble émetteur-récepteur qui permet la liaison par voie hertzienne avec les téléphones portables présents sur le véhicule et un système satellite établissant le lien permanent avec la station terrestre. La dite station terrestre comporte une passerelle reliant l'antenne satellite au réseau terrestre.

Le principe des télécommunications spatiales est simple : depuis sa position élevée au-dessus de la Terre, un satellite est visible en tous les points d'une vaste région ; il peut donc relayer des communications entre deux points quelconques de cette région. Les liaisons sont facilitées dans le du satellite géostationnaire situé à 36 000 km d'altitude au-dessus de l'équateur: l'engin spatial ne bougeant pas dans le ciel, des antennes fixes permettent d'établir le contact avec lui. Des satellites en orbites basses ou moyennes peuvent aussi servir à relayer des télécommunications, cependant

un service continu de télécommunications spatiales avec des satellites en orbite basses ou moyennes, nécessite de disposer d'un grand nombre de satellites.

Un réseau permet d'établir des liaisons avec des postes mobiles : "Immarsat", d'abord créé pour des navires, mais qui sert aussi désormais pour les avions et les véhicules terrestres. Ce réseau est toutefois destiné à des récepteurs spécifiques et ne permet pas la liaison avec des postes portables personnels de type "G.S.M." (Groupes Systèmes Mobiles) se trouvant à bord d'un navire éloigné des côtes.

Le système selon la présente invention a pour objectif de remédier à cet état de choses. Il permet en effet d'établir une connexion de type "G.S.M." embarqué en utilisant une liaison satellite de type "V.S.A.T." (Very Small Aperture Terminal).

La particularité du projet réside dans l'installation d'une baie GSM à bord d'un navire par laquelle tous les appels entrants/sortants convergeront. Tous ces appels ont comme support une liaison satellite qui permet d'établir une connexion permanente avec les installations basées à terre, cette liaison transmettant des informations de signalisation propres au système "G.S.M.", ainsi que le trafic voix.

Il est constitué par l'association d'une station terrestre existante pourvue d'un équipement assurant la liaison du réseau existant avec l'antenne satellite et d'une station embarquée à bord du navire comportant une station de contrôle pilotant un ensemble d'émetteurs-récepteurs permettant la liaison par voie hertzienne avec les téléphones mobiles présents sur le navire, un multiplexeur/démultiplexeur assurant la compression des signaux et un système satellite établissant le lien permanent avec la station terrestre.

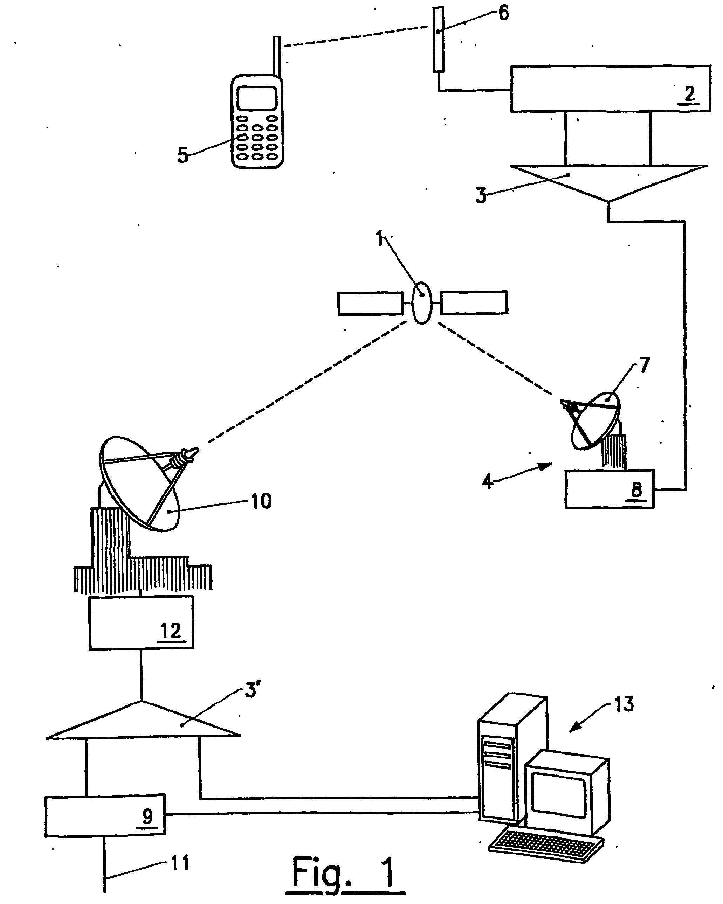

La description détaillée ci-après se rapporte à un exemple non limitatif d'une des formes de réalisation de l'objet de l'invention. Sur le dessin annexé, la figure 1 est un schéma montrant l'ensemble des éléments entrant en jeu pour permettre la liaison par satellite entre un téléphone portable situé à bord d'un navire et un réseau de télécommunication terrestre.

Le système tel qu'il apparaît sur la figure est constitué d'une installation embarquée et d'une installation terrestre communiquant entre elles par l'intermédiaire d'un satellite 1.

L'installation sur le navire (en partie haute de la figure) comporte trois parties : une station de contrôle 2, un multiplexeur/démultiplexeur 3 et un système satellite 4.

La station de contrôle 2, généralement désignée par le sigle "BSC" (Base Station Controller) permet une première concentration des circuits et pilote un ensemble d'émetteurs-récepteurs gérés par un module dé transmission ou "BTS" (Base Transceiver Station) qui a la charge des transmissions radio (modulation, démodulation, égalisation, codage). Plusieurs "BTS" peuvent être connectés à la station de contrôle 2 qui assure la gestion de ressources des canaux issus des modules de transmission, ainsi que le routage du canal de trafic. Dès l'instant où les communications sont établies, la station de contrôle fournit les commandes de contrôle de puissance et de gestion du passage du téléphone mobile 5 d'une cellule (zone de couverture) à une autre cellule ("handover").

Les émetteurs -récepteurs sont connectés à des antennes 6 ou des fils rayonnants permettant la liaison par voie hertzienne avec les téléphones mobiles 5 présents sur le navire.

Le multiplexeur/démultiplexeur 3 est connecté par une liaison de type E1 à la sortie de la station de contrôle 2. Il assure la compression des signaux en entrée, grâce à un système de compression vocale utilisant un mode de compression très Performant, avant leur transmission au système satellite "V.S.A.T." par une liaison de type X21 ou RS 422 ou autres.

Le multiplexeur pourra par exemple être un modèle KM 2100 de la société RadCom permettant d'obtenir une compression des canaux G.S.M. de l'ordre de 12,8 kbits/s si la qualité auditive est acceptable. Ce type de multiplexeur ainsi que ses évolutions futures permettra d'effectuer des transferts de données informatiques ainsi que des données audio et vidéo à des taux de compression fournissant une qualité acceptable.

Le système satellite 4 établira un lien permanent variant de 128 à 512 Kbits/s avec une station terrestre "V.S.A.T.". Il est constitué, d'une partie extérieure ("Outdoor Unit") composée d'une antenne parabolique 7 stabilisée de 2,4 m de diamètre sous radôme avec émetteur et récepteur, et d'une partie intérieure ("Indoor Unit") équipée d'un module de pointage de l'antenne et d'un modem satellite 8 "V.S.A.T". Connecté par une interface aux normes X21 ou RS422 (ou éventuellement autre) pour le transfert de données vers le multiplexeur/démultiplexeur 3.

L'installation à terre (partie inférieure de la figure) comporte également trois parties: un multiplexeur/démultiplexeur 3' du même modèle que celui du bord et fournissant des fonctions identiques, une "passerelle" 9 reliant l'antenne satellite 10 au réseau terrestre 11 (Réseau Téléphonique commuté : RTC) par l'intermédiaire d'un émetteur -récepteur 12 "V.S.A.T." et un module de gestion des opérations 13.

La "passerelle" 9 ou "MSC" (Mobile Services Switching Center) gère l'établissement de communications entre, un mobile et le réseau téléphonique commuté, la transmission des messages courts, la transmission d'informations via une ligne spécialisée et, s'il y a lieu, le contrôle du changement de zone durant la communication ("handover").

La base de données concernant les abonnés mobiles présents dans une zone considérée ("VLR") est intégrée dans le "MSC". Le "VLR", appelé aussi "enregistreur de localisation d'accueil" est une base de données qui mémorise les données d'abonnement des abonnés présents dans une zone géographique. Le fait d'intégrer le "VLR" à la "passerelle" 9 ("MSC') permet de simplifier les dialogues nécessaires lors de l'établissement d'un appel. Le "MSC" fournit donc les fonctions de base d'auto - commutation pour les mobiles situés dans sa zone (gestion de mobilité, gestion des appels).

Le module de gestion des opérations 13 ou "OMC" (Opération and Maintenance Center) fournit les fonctions de centre d'opération et de gestion pour la station de contrôle terrestre ("BSC") et la "passerelle" 9 ("MSC"). Le module "OMC" peut gérer un ou plusieurs "MSC", ainsi que les éléments rattachés ("BSC", module de transmission "BTS"). Les outils du module de gestion des opérations 13 incluent l'administration du système, la configuration du réseau, la gestion des alarmes et événements, les mesures de performances, la base de données des abonnés, la diffusion des messages.

Grâce au système décrit, toute personne se présentant à bord d'un navire équipé pourra utiliser son propre téléphone portable. Son téléphone effectuera une recherche de réseau. L'installation présentée ci-dessus lui permettra d'enregistrer son téléphone dans la base de données "G.S.M.".

Les équipements des installations embarquée et terrestre peuvent aisément être adaptés pour évoluer vers les applications récentes ou à venir, en particulier celles assurant la transmission des données (ce que permet d'ores et déjà le système "G.S.M.") ou de la vidéo en temps réel ou non.

Le positionnement des divers éléments constitutifs donne à l'objet de l'invention un maximum d'effets utiles qui n'avaient pas été, à ce jour, obtenus par des systèmes similaires.

## Revendications

1. Equipement de liaison par satellite destiné à être installé à bord d'un navire comprenant une station de contrôle (2) pilotant un ensemble d'émetteurs - récepteurs permettant une liaison par voie hertzienne avec des téléphones mobiles présents sur le navire, l'équipement de liaison par satellite étant apte à établir un lien entre l'ensemble d'émetteurs - récepteurs et un équipement terrestre via un système satellite (4), l'équipement destiné à être installé à bord d'un navire étant **caractérisé en ce qu'**il comporte un multiplexeur/démultiplexeur (3) assurant la compression et la décompression des signaux entre la station de contrôle (2) et le système satellite (4).

2. Equipement selon la revendication 1, dans lequel le système satellite (4) est constitué d'une partie extérieure composée d'une antenne parabolique (7) stabilisé à 2,4 m de diamètre sous radôme avec émetteur et récepteur, et d'une partie intérieure équipée d'un module de pointage de l'antenne et d'un modem satellite type « VSAT » connecté au multiplexeur/démultipfexeur (3) via une interface X21, RS-422 ou similaire.

3. Equipement selon la revendication 2, dans lequel le système satellite (4) est agencé pour établir un lien permanent variant de 128 à 512 Kbits/s avec une station terrestre « VSAT ».

4. Equipement selon l'une des revendications qui précèdent, dans lequel la station de contrôle (2) est agencée pour assurer une première concentration des circuits et piloter un ensemble d'émetteurs - récepteurs gérés par au moins un module de transmission (BTS) ayant le charge des transmissions radio , lesdits émetteurs - récepteurs étant connectés à des antennes (6) ou des fils rayonnants permettant la liaison par voie hertzienne avec des téléphones mobiles (5) présents sur le navire.

5. Equipement selon la revendication 4, dans lequel plusieurs modules de transmission peuvent être connectés à la station de contrôle (2).

6. Equipement selon l'une des revendications qui précèdent, dans lequel la station de contrôle (2) est agencée pour fournir les commandes de contrôle de puissance et de gestion du passage du téléphone mobile (5) d'une cellule à une autre cellule.

7. Equipement selon l'une des revendications qui précèdent, l'équipement étant adapté pour assurer la transmission des données.

8. Equipement selon l'une des revendications qui précèdent, l'équipement étant adapté pour assurer la transmission de la vidéo en temps réel ou non.

9. Equipement de liaison par satellite (3', 9, 13) destiné à être installé à terre, comprenant une passerelle (9) apte à établir une liaison entre un réseau de télécommunication terrestre (11) et un équipement de liaison par satellite embarqué dans un navire via un système satellite (10, 12), l'équipement étant **caractérisé en ce qu'**il comporte un multiplexeur/démultiplexeur (3') assurant la compression et la décompression des signaux entre la passerelle (9) et le système satellite (10, 12).

10. Equipement selon la revendication 9. comprenant un module de gestion des opérations (13) apte à piloter la passerelle (9).

11. Equipement selon la revendication 10, dans lequel le module de gestion des opérations (13) est apte à gérer plusieurs passerelles (9) ainsi que les éléments rattachés tels que station de contrôle et module de transmission.

12. Equipement selon l'une des revendications 10 ou 11, dans lequel le module de gestion des opérations (13) comporte des outils de gestion du réseau, de gestion d'alarmes et événements, de mesures de performances, d'une base de données des abonnés et des diffusions de messages.

13. Equipement selon l'une des revendications 9 à 12, dans lequel le système satellite (10, 12) comprend un émetteur - récepteur (12) équipé d'un modem de type « VSAT » relié à la passerelle (9).

14. Equipement selon l'une des revendications 9 à 13, dans lequel la passerelle (9) est configurée pour gérer l'établissement de communications entre un téléphone mobile (5) et un réseau téléphonique commuté (RTC), la transmission d'informations via une ligne spécialisée et, s'il y a lieu le contrôle du changement de zone durant une communication.

15. Equipement selon l'une des revendications 9 à 14, l'équipement étant adapté pour assurer la transmission des données.

16. Equipement selon l'une des revendications 9 à 15, l'équipement étant adapté pour assurer la transmission de la vidéo en temps réel ou non.

## Patentansprüche

1. Satellitenverbindungsanlage, die vorgesehen ist, um an Bord eines Schiffes aufgestellt zu werden, mit einer Steuerstation (2), die eine Anordnung von Sendern-Empfängern steuert, die eine Funkverbindung mit den auf dem Schiff vorhandenen Mobiltelefonen erlauben, wobei die Satellitenverbindungsanlage in der Lage ist, über ein Satellitensystem (4) eine Verbindung zwischen der Anordnung von Sendern-Empfängern und einer erdgebundenen Anlage herzustellen, wobei die an Bord eines Schiffes aufzustellende Anlage **dadurch gekennzeichnet ist, daß** sie einen Multiplexer/Demultiplexer (3) aufweist, der die Kompression und Dekompression von Signalen zwischen der Steuerstation (2) und dem Satellitensystem (4) sicherstellt.

2. Anlage nach Anspruch 1, in welcher sich das Satellitensystem (4) aus einem externen Teil, der eine stabilisierte Parabolantenne (7) eines Durchmessers von 2,4 m unter einer Kuppel mit Sender und Empfänger aufweist, und aus einem internen Teil zusammensetzt, der mit einem Antennenausrichtungsmodul und einem Satellitenmodem des Typs "VSAT" ausgestattet ist, das über eine X21-, RS-422- oder eine ähnliche Schnittstelle mit dem Multiplexer/Demultiplexer (3) verbunden ist.

3. Anlage nach'Anspruch 2, in welcher das Satellitensystem (4) eingerichtet ist, um eine von 128 bis 512 Kbit/s variable Dauerverbindung mit einer erdgebundenen "VSAT"-Station herzustellen.

4. Anlage nach einem der vorstehenden Ansprüche, in welcher die Steuerstation (2) eingerichtet ist, eine erste Konzentration von Leitungen sicherzustellen und eine Anordnung von Sendern-Empfängern zu steuern, die von mindestens einem Übertragungsmodul (BTS) verwaltet werden, das den Dienst von Funkübertragungen hat, wobei die Sender-Empfänger mit Antennen (6) oder Strahlungsdrähten verbunden sind, die die Funkverbindung mit auf dem Schiff vorhandenen Mobiltelefonen (5) erlauben.

5. Anlage nach Anspruch 4, in welcher mehrere Übertragungsmodule mit der Steuerstation (2) verbunden sein können.

6. Anlage nach einem der vorstehenden Ansprüche, in welcher die Steuerstation (2) eingerichtet ist, die Befehle zur Steuerung der Leistung und der Verwaltung des Übergangs des Mobiltelefons (5) von einer Zelle in eine andere Zelle bereitzustellen.

7. Anlage nach einem der vorstehenden Ansprüche, wobei die Anlage geeignet ist, um die Übertragung von Daten sicherzustellen.

8. Anlage nach einem der vorstehenden Ansprüche, wobei die Anlage geeignet ist, um die Videoübertragung in Echtzeit oder Nichtechtzeit sicherzustellen.

9. Satellitenverbindungsanlage (3', 9, 13), die vorgesehen ist, um auf dem Land aufgestellt zu werden, mit einer Schnittstelle (9), die in der Lage ist, über ein Satellitensystem (10, 12) eine Verbindung zwischen einem erdgebundenen Fernmeldenetz (11) und einer Satellitenverbindungsanlage an Bord eines Schiffes herzustellen, wobei die Anlage **dadurch gekennzeichnet ist, daß** sie einen Multiplexer/Demultiplexer (3') aufweist, der die Kompression und die Dekompression von Signalen zwischen der Schnittstelle (9) und dem Satellitensystem (10, 12) sicherstellt.

10. Anlage nach Anspruch 9, mit einem Betriebsverwaltungsmodul (13), das in der Lage ist, die Schnittstelle (9) zu steuern.

11. Anlage nach Anspruch 10, in welcher das Betriebsverwaltungsmodul (13) in der Lage ist, mehrere Schnittstellen (9) sowie daran angeschlossene Elemente wie Steuerstation und Übertragungsmodul zu verwalten.

12. Anlage nach einem der Ansprüche 10 oder 11, in welcher das Betriebsverwaltungsmodul (13) Werkzeuge zur Netzverwaltung, zur Verwaltung von Alarmen und Vorfällen, der Leistungsmaßnahmen, einer Datenbank von Teilnehmern und der Versendung von Nachrichten aufweist.

13. Anlage nach einem der Ansprüche 9 bis 12, in welcher das Satellitensystem (10, 12) einen Sender-Empfänger (12) aufweist, der mit einem mit der Schnittstelle (9) verbundenen Modem des Typs "VSAT" ausgestattet ist.

14. Anlage nach einem der Ansprüche 9 bis 13, in welcher die Schnittstelle (9) so konfiguriert ist, um die Herstellung von Kommunikationsverbindungen zwischen einem Mobiltelefon (5) und einem geschalteten Fernsprechnetz (RTC), die Übertragung von Informationen über eine Standleitung und gegebenenfalls die Steuerung des Zonenwechsels während einer Kommunikationsverbindung zu verwalten.

15. Anlage nach einem der Ansprüche 9 bis 14, wobei die Anlage geeignet ist, die Übertragung von Daten sicherzustellen.

16. Anlage nach einem der Ansprüche 9 bis 15, wobei die Anlage geeignet ist, die Videoübertragung in Echtzeit oder Nichtechtzeit sicherzustellen.

## Claims

1. Satellite-based linking equipment intended to be installed on board a ship comprising a control station (2) driving a set of transceivers allowing RF linkage with mobile telephones present on the ship, the satellite based linking equipment being able to establish a link between the set of transceivers and terrestrial equipment via a satellite system (4), the equipment intended to be installed on board a ship being **characterized in that** it comprises a multiplexer/demultiplexer (3) ensuring compression and decompression of the signals between the control station (2) and the satellite system (4).

2. Equipment according to Claim 1, in which the satellite system (4) consists of an outdoor part composed of a parabolic antenna (7) stabilized with 2,4 m diameter under radome with transmitter and receiver, and of an indoor part equipped with a module for pointing the antenna and a satellite modem of "VSAT" type connected to the multiplexer/demultiplexer (3) via an X21, RS-422 or similar interface.

3. Equipment according to Claim 2, in which the satellite system (4) is devised so as to establish a permanent link varying from 128 to 512 Kbits/s with a "VSAT" terrestrial station.

4. Equipment according to one of the preceding claims, in which the control station (2) is devised to ensure a first concentration of the circuits and to drive a set of transceivers managed by at least one transmission module (BTS) in charge of the radio transmissions, the said transceivers being connected to antennas (6) or radiating wires allowing RF linkage with mobile telephones (5) present on the ship.

5. Equipment according to Claim 4, in which several transmission modules may be connected to the control station (2).

6. Equipment according to one of the preceding claims, in which the control station (2) is devised so as to provide the commands for controlling power and managing the switchover of the mobile telephone (5) from one cell to another cell.

7. Equipment according to one of the preceding claims, the equipment being suitable for ensuring data transmission.

8. Equipment according to one of the preceding claims, the equipment being suitable for ensuring the transmission of video in real time or otherwise.

9. satellite-based linking equipment (3', 9, 13) intended to be installed on land, comprising a gateway (9) able to establish a linkage between a terrestrial telecommunication network (11) and satellite-based linking equipment on board a ship via a satellite system (10, 12), the equipment being **characterized in that** it comprises a multiplexer/demultiplexer (3') ensuring compression and decompression of the signals between the gateway (9) and the satellite system (10, 12).

10. Equipment according to Claim 9, comprising an operations management module (13) able to drive the gateway (9).

11. Equipment according to Claim 10, in which the operations management module (13) is able to manage several gateways (9) as well as the attached elements such as control station and transmission module.

12. Equipment according to one of Claims 10 or 11, in which the operations management module (13) comprises tools for managing the network, managing alarms and events, measurements of performance, a database of subscribers and broadcasts of messages.

13. Equipment according to one of Claims 9 to 12, in which the satellite system (10, 12) comprises a transceiver (12) equipped with a "VSAT" type modem linked to the gateway (9).

14. Equipment according to one of Claims 9 to 13, in which the gateway (9) is configured so as to manage the establishing of communications between a mobile telephone (5) and a switched telephone network (STN), the transmission of information via a specialized line and, if appropriate, the control of the zone change during a communication.

15. Equipment according to one of Claims 9 to 14, the equipment being suitable for ensuring data transmission.

16. Equipment according to one of Claims 9 to 15, the equipment being suitable for ensuring the transmission of video in real time or otherwise.
